# FASCICULE DE BREVET EUROPEEN

(11) **EP 3 576 944 B1**
(45) Date de publication et mention de la délivrance du brevet: **31.08.2022**
(21) Numéro de dépôt: 18712937.4
(22) Date de dépôt: 01.02.2018
(51) Int. Cl.: B32B 17/10

(54) **VITRAGE FEUILLETE DONT UNE SEULE FEUILLE DE VERRE PRESENTE UN TROU TRAVERSANT**
VERBUNDGLAS MIT EINER EINZELGLASSCHEIBE MIT EINEM DURCHGANGSLOCH
LAMINATED GLASS IN WHICH A SINGLE GLASS SHEET HAS A THROUGH-HOLE

(30) Priorité: 03.02.2017 FR 1750929
(43) Date de publication de la demande: 11.12.2019
(73) Titulaire: SAINT-GOBAIN GLASS FRANCE, 92400 Courbevoie (FR)
(72) Inventeur: HENNION, Alexandre, 60590 Trie Château (FR)
(74) Mandataire: Saint-Gobain Recherche
(86) Numéro de dépôt international: PCT/FR2018/050240
(87) Numéro de publication internationale: WO 2018/142078

(56) Documents cités:
- WO-A1-2007/057461
- WO-A1-2009/001264
- WO-A1-2014/057224
- US-A- 6 103 999
- US-A1- 2006 292 380
- DATABASE WPI Week 200602 22 décembre 2005 (2005-12-22) Thomson Scientific, London, GB; AN 2006-015225 XP002773019, -& JP 2005 350290 A (NIPPON SHEET GLASS CO LTD) 22 décembre 2005 (2005-12-22)
- DATABASE WPI Week 200647 22 juin 2006 (2006-06-22) Thomson Scientific, London, GB; AN 2006-457381 XP002773020, -& JP 2006 160598 A (HANSHIN GLASS KOGYO KK) 22 juin 2006 (2006-06-22)

## Description

La présente invention a trait à un vitrage feuilleté dont l'une seulement des feuilles de verre constitutive présente un trou traversant.

Un vitrage feuilleté comporte au moins deux feuilles de verre collées l'une à l'autre par une couche adhésive intercalaire, telle que polyvinylbutyral.

L'une seulement de ces deux feuilles de verre peut présenter un trou traversant : soit on retire alors la couche adhésive intercalaire à l'emplacement du trou et les fonctions liées à la sécurité ne sont plus garanties (les propriétés mécaniques, telles qu'attestées par essais de chute de bille -en anglais « bail drop »- sont insuffisantes), soit on laisse la couche adhésive intercalaire à cet emplacement et elle va se dégrader ou fluer à la fabrication du vitrage feuilleté ou à température élevée, et la résistance du vitrage au vieillissement à température élevée et/ou taux d'humidité élevé, ou attestée par un essai de mise en contact avec une atmosphère à taux d'humidité au moins égal à 95 % à température telle que de 70 °C pendant une durée de 7 voire 14 jours par exemple, sera insuffisante.

Le document WO 2009/001264 A1 divulgue une feuille fine formée de bandes de métal, dont l'épaisseur n'est pas décrite.

La même remarque s'applique à la feuille fine en acier inoxydable du document JP 2005 350290 A. De plus cette feuille fine n'est pas étendue selon la surface du trou et une surface périphérique autour de celui-ci, mais au contraire exactement conforme au trou.

Le document US 2006/292380 A1 décrit une feuille d'épaisseur de l'ordre du nanomètre qui, à l'évidence, est inapte à obturer le trou hermétiquement, garantir le feuilletage et améliorer les propriétés mécaniques du vitrage feuilleté, à l'instar de la feuille fine du document JP 2005 350290 A, du fait qu'elle est exactement conforme au trou. Ces fonctions ne sont pas non plus décrites dans le document WO 2009/001264 A1, ni aucunement déductibles de celui-ci.

L'invention a pour but de garantir l'intégrité d'un vitrage feuilleté dont une feuille de verre a un trou traversant, pendant son procédé de fabrication, et d'augmenter sa résistance au vieillissement dans les conditions les plus exigeantes.

Ce but est atteint par l'invention, qui en conséquence a pour objet un vitrage feuilleté comprenant une première feuille de verre et une seconde feuille de verre collées l'une à l'autre par l'intermédiaire d'une couche adhésive intercalaire, dans lequel la seconde feuille de verre présente un trou traversant, caractérisé en ce que selon la surface du trou et une surface périphérique autour de celui-ci, une feuille fine d'épaisseur comprise entre 0,01 et 0,5 mm, en un matériau compatible avec la fabrication et les sollicitations mécaniques et le vieillissement du vitrage feuilleté, est intercalée entre la couche adhésive intercalaire et la seconde feuille de verre, et en ce que la feuille fine comprend un matériau verrier minéral tel que verre ou vitrocéramique et/ou un matériau polymère tel que polycarbonate, poly(méthacrylate de méthyle) et/ou un métal résistant à la corrosion tel qu'aluminium et ou un matériau composite tel que de carbone notamment sous forme de fibres.

On entend ici essentiellement par « feuille de verre » une feuille de matériau verrier minéral tel que verre notamment silicosodocalcique flotté, borosilicate, aluminosilicate, vitrocéramique, mais aussi organique tel que polycarbonate, poly(méthacrylate de méthyle), résine ionomère.

La couche adhésive intercalaire est essentiellement constituée de polyvinylbutyral, copolymère éthylène - acétate de vinyle, ou polyuréthane thermoplastique.

Un métal peut désigner un alliage métallique ; il peut être opaque, réfléchissant, électroconducteur auquel cas une isolation doit être disposée entre les deux pistes

Grâce à l'invention, la feuille fine obture le trou hermétiquement : le feuilletage est garanti, les propriétés mécaniques telles qu'attestées par essais de chute de bille, sont améliorées. La tenue au vieillissement en température et humidité est bonne.

Selon des caractéristiques préférées du vitrage feuilleté de l'invention :
- la feuille fine présente un trou ;
- dans cette variante, la couche adhésive intercalaire comprend des fils électroconducteurs qui traversent le trou de la feuille fine, ou bien
- la couche adhésive intercalaire comprend des fils électroconducteurs reliés à un connecteur plat disposé sur la face de la couche adhésive intercalaire orientée vers la seconde feuille de verre de manière à être accessible de l'extérieur du vitrage feuilleté par le trou de la feuille fine ;

- dans une autre variante, la face de la feuille fine orientée vers la seconde feuille de verre porte un connecteur plat relié à une couche ou des fils électroconducteurs disposés sur la face de la seconde feuille de verre orientée vers la couche adhésive intercalaire ;
- la feuille fine est opaque dans son épaisseur ou par traitement de l'une au moins de ses faces, ou bien la face de la feuille fine orientée vers la seconde feuille de verre est réfléchissante ; ces mesures visent par exemple à éviter les points lumineux visibles.du côté du vitrage feuilleté opposé à la feuille fine (notamment côté extérieur au véhicule équipé de ce vitrage) si la densité optique de l'émail noir n'est pas suffisante pour masquer la source lumineuse installée dans le trou traversant de la seconde feuille de verre.
   L'invention a également pour objets
- un premier procédé de fabrication d'un vitrage feuilleté décrit précédemment, caractérisé en ce que la feuille fine est fixée sur la couche adhésive intercalaire par un échauffement local, puis on met en œuvre un procédé d'assemblage de vitrage feuilleté ;
- un second procédé de fabrication d'un vitrage feuilleté décrit précédemment, caractérisé en ce que la feuille fine est fixée sur la seconde feuille de verre au moyen de colle ou d'une bande adhésive double face, puis on met en œuvre un procédé d'assemblage de vitrage feuilleté ;
- un troisième procédé de fabrication d'un vitrage feuilleté tel que décrit précédemment, caractérisé en ce que les constituants du vitrage feuilleté sont superposés, puis on met en œuvre un procédé d'assemblage de vitrage feuilleté.

Dans la mise en œuvre de chacun de ces trois procédés, on peut avantageusement effectuer un étirement local de la couche adhésive intercalaire dans la fraction de sa surface destinée à être en contact avec la feuille fine. Enfin, d'autres objets de l'invention consistent en
- l'application d'un vitrage feuilleté tel que décrit ci-dessus pour intégrer un élément connecté à une alimentation électrique, tel que pour l'éclairage, la géolocalisation - navigation, qu'une caméra simple ou double (stéréoscopique) ; et
- l'application d'un vitrage feuilleté tel que décrit ci-dessus pour intégrer un élément sans connexion électrique.
   L'invention sera mieux comprise à la lumière de la description suivante des représentations schématiques annexées d'un vitrage feuilleté dont l'une seulement des feuilles de verre présente un trou traversant, dans lesquelles :
- les Figures 1 et 2 sont des vues en coupe transversale de vitrages mettant en œuvre des solutions connues ;
- la Figure 3 est une vue en coupe transversale d'un vitrage selon l'invention ;
- la Figure 4 est une vue de face d'un vitrage standard conforme à l'invention et
- les Figures 5 et 6 sont des vues de face de deux variantes d'un vitrage selon l'invention à connexion électrique.

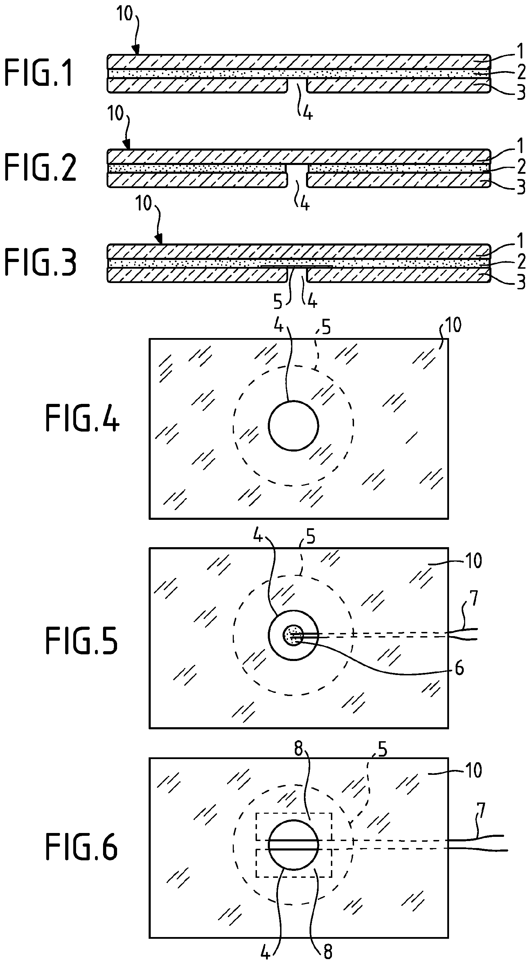

En référence aux Figures 1 et 2, un vitrage feuilleté 10 est constitué d'une première feuille de verre 1 et d'une seconde feuille de verre 3 collées l'une à l'autre par l'intermédiaire d'une couche adhésive intercalaire 2 de polyvinylbutyral (PVB). Seule la seconde feuille de verre 3 présente un trou traversant 4.

Selon une première voie (Figure 1), on laisse le PVB à l'emplacement du trou traversant 4, mais celui-ci risque de fluer à température élevée, et le vitrage risque de se dégrader fortement à température élevée, fort taux d'humidité, et ne pas satisfaire aux essais de vieillissement, par exemple à température telle que de 70 °C et taux d'humidité au moins égal à 95 % pendant 7 jours, voire 14 jours, éventuellement en présence d'un brouillard salin ou autre.

Selon une seconde voie (Figure 2), le PVB est retiré à l'emplacement du trou traversant 4, mais alors les fonctions du vitrage feuilleté liées à la sécurité ne sont plus garanties, ses propriétés mécaniques sont insuffisantes et le vitrage ne satisfait plus aux essais de type à chute de bille par exemple.

En référence à la Figure 3, une feuille de verre 5 de 0,15 mm d'épaisseur est intercalée, à l'emplacement du trou traversant 4 de la seconde feuille de verre 3, entre cette dernière 3 et la couche de PVB 2, conformément à l'invention.

La fine feuille de verre 5 peut être simplement empilée avec les autres constituants du vitrage feuilleté, puis on peut mettre en œuvre un procédé classique de fabrication d'un vitrage feuilleté : désaérage, autoclave...

La feuille fine de verre 5 peut préalablement être fixée sur la couche de PVB 2 par un échauffement local, ou encore fixée sur la seconde feuille de verre 3 au moyen de colle ou d'une bande adhésive double face.

On peut d'autre part avantageusement effectuer un étirement local de la couche adhésive intercalaire dans la fraction de sa surface destinée à être en contact avec la feuille fine. Cette disposition permet de compenser / supprimer la surépaisseur créée par l'ajout de la feuille fine 5 de verre.

Le vitrage feuilleté 10 de la Figure 3 présente les propriétés mécaniques requises, ainsi qu'une résistance au vieillissement même à haute température et en atmosphère humide comme mentionnées précédemment, ou exposé à divers composés chimiques, sels, hydrocarbures, acides...

Trois variantes du vitrage feuilleté 10 de la Figure 3 sont représentées vues de face aux Figures 4 à 6.

Dans chacune de ces figures, la feuille fine de verre 5 a la géométrie d'un disque, ainsi que le trou traversant 4 dans la seconde feuille de verre 3, les deux disques 5, 4 étant représentés concentriques.

A la Figure 5, la feuille fine de verre 5 présente un trou 6 ayant la forme d'un disque également concentrique, de petit diamètre par rapport à celui du trou traversant 4.

Des fils électroconducteurs 7 représentés schématiquement sont noyés dans la couche adhésive intercalaire 2 et reliés à une alimentation électrique de type bus bars ou équivalent, dans la structure feuilletée du vitrage 10. Des fils électroconducteurs 7 sortent par le trou 6 de manière à être reliés à un élément électronique, un éclairage...

Une variante de ce vitrage feuilleté 10 de la Figure 5 peut s'en différencier par le fait que les fils électroconducteurs 7 sont reliés à un connecteur plat non représenté positionné sur la face de la couche de PVB 2 orientée vers la seconde feuille de verre 3, au niveau du trou 6 dans la feuille fine de verre 5. Le connecteur plat est alors accessible de l'extérieur du vitrage feuilleté 10 par le trou 6 dans la feuille fine de verre 5, par exemple pour procurer l'alimentation électrique d'un élément électronique, d'un éclairage (non représentés), au moyen d'un connecteur par contact par exemple, du type connu sur les piles à lamelles notamment.

En référence à la Figure 6, un connecteur plat 8 peut également être collé ou déposé sous forme d'une couche mince sur la face de la feuille fine de verre 5 orientée vers la seconde feuille de verre 3. La feuille fine de verre 5 ne présente ici pas de trou 6. Le connecteur plat 8 est accessible de l'extérieur du vitrage feuilleté 10 par le trou 4 dans la seconde feuille de verre 3, par exemple pour procurer l'alimentation électrique d'un élément électronique, d'un éclairage (non représentés), au moyen d'un connecteur par contact par exemple, comme déjà mentionné ci-dessus.

Dans cette réalisation, le connecteur plat 8 peut être relié à des fils électroconducteurs 7 noyés dans la couche de PVB 2, ou bien à une couche électroconductrice sur la face de la seconde feuille de verre 3 orientée vers la couche de PVB 2, les fils électroconducteurs 7 ou la couche électroconductrice étant eux-mêmes, dans chaque cas, reliés à une alimentation électrique.

## Revendications

1. Vitrage feuilleté (10) comprenant une première feuille de verre (1) et une seconde feuille de verre (3) collées l'une à l'autre par l'intermédiaire d'une couche adhésive intercalaire (2), dans lequel la seconde feuille de verre (3) présente un trou traversant (4), **caractérisé en ce que** selon la surface du trou (4) et une surface périphérique autour de celui-ci (4), une feuille fine (5) d'épaisseur comprise entre 0,01 et 0,5 mm, en un matériau compatible avec la fabrication et les sollicitations mécaniques et le vieillissement du vitrage feuilleté (10), est intercalée entre la couche adhésive intercalaire (2) et la seconde feuille de verre (3), et **en ce que** la feuille fine (5) comprend un matériau verrier minéral tel que verre ou vitrocéramique et/ou un matériau polymère tel que polycarbonate, poly(méthacrylate de méthyle) et/ou un métal résistant à la corrosion tel qu'aluminium et ou un matériau composite tel que de carbone notamment sous forme de fibres.

2. Vitrage feuilleté (10) selon la revendication 1, **caractérisé en ce que** la feuille fine (5) présente un trou (6).

3. Vitrage feuilleté (10) selon la revendication 2, **caractérisé en ce que** la couche adhésive intercalaire (2) comprend des fils électroconducteurs (7) qui traversent le trou (6) de la feuille fine (5).

4. Vitrage feuilleté (10) selon la revendication 2, **caractérisé en ce que** la couche adhésive intercalaire (2) comprend des fils électroconducteurs (7) reliés à un connecteur plat (8) disposé sur la face de la couche adhésive intercalaire (2) orientée vers la seconde feuille de verre (3) de manière à être accessible de l'extérieur du vitrage feuilleté (10) par le trou (6) de la feuille fine (5).

5. Vitrage feuilleté (10) selon la revendication 1, **caractérisé en ce que** la face de la feuille fine (5) orientée vers la seconde feuille de verre (3) porte un connecteur plat (8) relié à une couche ou des fils électroconducteurs (7) disposés sur la face de la seconde feuille de verre (3) orientée vers la couche adhésive intercalaire (2).

6. Vitrage feuilleté (10) selon l'une des revendications précédentes, **caractérisé en ce que** la feuille fine (5) est opaque dans son épaisseur ou par traitement de l'une au moins de ses faces.

7. Vitrage feuilleté (10) selon l'une des revendications précédentes, **caractérisé en ce que** la face de la feuille fine (5) orientée vers la seconde feuille de verre (3) est réfléchissante.

8. Procédé de fabrication d'un vitrage feuilleté (10) selon l'une des revendications précédentes, **caractérisé en ce que** la feuille fine (5) est fixée sur la couche adhésive intercalaire (2) par un échauffement local, puis on met en œuvre un procédé d'assemblage de vitrage feuilleté.

9. Procédé de fabrication d'un vitrage feuilleté (10) selon l'une des revendications 1 à 7, **caractérisé en ce que** la feuille fine (5) est fixée sur la seconde feuille de verre (3) au moyen de colle ou d'une bande adhésive double face, puis on met en œuvre un procédé d'assemblage de vitrage feuilleté.

10. Procédé de fabrication d'un vitrage feuilleté (10) selon l'une des revendications 1 à 7, **caractérisé en ce que** les constituants du vitrage feuilleté (10) sont superposés, puis on met en œuvre un procédé d'assemblage de vitrage feuilleté.

11. Procédé selon l'une des revendications 8 à 10, **caractérisé en ce qu'**il comprend un étirement local de la couche adhésive intercalaire (2) dans la fraction de sa surface destinée à être en contact avec la feuille fine (5).

12. Application d'un vitrage feuilleté (10) selon l'une des revendications 1 à 7 pour intégrer un élément connecté à une alimentation électrique, tel que pour l'éclairage, la géolocalisation - navigation, qu'une caméra simple ou double (stéréoscopique).

13. Application d'un vitrage feuilleté (10) selon l'une des revendications 1 à 7 pour intégrer un élément sans connexion électrique.

## Patentansprüche

1. Verbundglas (10), umfassend eine erste Glasscheibe (1) und eine zweite Glasscheibe (3), die mittels einer Klebstoffzwischenschicht (2) miteinander verklebt sind, wobei die zweite Glasscheibe (3) ein Durchgangsloch (4) aufweist, **dadurch gekennzeichnet, dass** übereinstimmend mit der Oberfläche des Lochs (4) und einer Umfangsoberfläche um dieses (4) herum eine dünne Scheibe (5) einer Dicke zwischen 0,01 und 0,5 mm aus einem Material, das mit der Herstellung und den mechanischen Beanspruchungen und der Alterung des Verbundglases (10) kompatibel ist, zwischen der Klebstoffzwischenschicht (2) und der zweiten Glasscheibe (3) eingefügt ist, **und dadurch, dass** die dünne Scheibe (5) ein mineralisches Glasmaterial wie Glas oder Glaskeramik und/oder ein Polymermaterial wie Polycarbonat, Poly(methylmethacrylat) und/oder ein korrosionsbeständiges Metall wie Aluminium und oder ein Verbundmaterial wie Kohlenstoff, insbesondere in Form von Fasern, umfasst.

2. Verbundglas (10) nach Anspruch 1, **dadurch gekennzeichnet, dass** die dünne Scheibe (5) ein Loch (6) aufweist.

3. Verbundglas (10) nach Anspruch 2, **dadurch gekennzeichnet, dass** die Klebstoffzwischenschicht (2) elektrisch leitende Drähte (7) umfasst, die das Loch (6) in der dünnen Scheibe (5) durchqueren.

4. Verbundglas (10) nach Anspruch 2, **dadurch gekennzeichnet, dass** die Klebstoffzwischenschicht (2) elektrisch leitende Drähte (7) umfasst, die mit einem flachen Verbindungsstück (8) verbunden sind, das auf der Seite der Klebstoffzwischenschicht (2) angeordnet ist, die der zweiten Glasscheibe (3) derart zugewandt ist, um von der Außenseite des Verbundglases (10) durch das Loch (6) in der dünnen Scheibe (5) zugänglich zu sein.

5. Verbundglas (10) nach Anspruch 1, **dadurch gekennzeichnet, dass** die Seite der dünnen Scheibe (5), die der zweiten Glasscheibe (3) zugewandt ist, ein flaches Verbindungsstück (8) trägt, das mit einer elektrisch leitenden Schicht oder elektrisch leitenden Drähten (7) verbunden ist, die auf der Seite der zweiten Glasscheibe (3) angeordnet sind, die der Klebstoffzwischenschicht (2) zugewandt ist.

6. Verbundglas (10) nach einem der vorstehenden Ansprüche, **dadurch gekennzeichnet, dass** die dünne Scheibe (5) in ihrer Dicke oder durch Behandlung mindestens einer ihrer Seiten undurchsichtig ist.

7. Verbundglas (10) nach einem der vorstehenden Ansprüche, **dadurch gekennzeichnet, dass** die Seite der dünnen Scheibe (5), die der zweiten Glasscheibe (3) zugewandt ist, reflektierend ist.

8. Verfahren zur Herstellung eines Verbundglases (10) nach einem der vorstehenden Ansprüche, **dadurch gekennzeichnet, dass** die dünne Scheibe (5) auf der Klebstoffzwischenschicht (2) durch eine lokale Erwärmung befestigt wird, dann ein Verfahren zum Zusammenfügen von Verbundglas durchgeführt wird.

9. Verfahren zur Herstellung eines Verbundglases (10) nach einem der Ansprüche 1 bis 7, **dadurch gekennzeichnet, dass** die dünne Scheibe (5) auf der zweiten Glasscheibe (3) mit Klebstoff oder einem doppelseitigem Klebeband befestigt wird, dann ein Verfahren zum Zusammenfügen von Verbundglas durchgeführt wird.

10. Verfahren zur Herstellung eines Verbundglases (10) nach einem der Ansprüche 1 bis 7, **dadurch gekennzeichnet, dass** die Bestandteile des Verbundglases (10) übereinander gelegt werden, dann ein Verfahren zum Zusammenfügen von Verbundglas durchgeführt wird.

11. Verfahren nach einem der Ansprüche 8 bis 10, **dadurch gekennzeichnet, dass** es eine lokale Dehnung der Klebstoffzwischenschicht (2) in dem Teil ihrer Oberfläche umfasst, der dazu bestimmt ist, mit der dünnen Scheibe (5) in Kontakt zu sein.

12. Anwendung eines Verbundglases (10) nach einem der Ansprüche 1 bis 7 zum Integrieren eines Elements, das an eine Stromversorgung angeschlossen ist, wie zur Beleuchtung, Geolokalisierung - Navigation, als eine Einzel- oder Doppelkamera (stereoskopisch).

13. Anwendung eines Verbundglases (10) nach einem der Ansprüche 1 bis 7 zum Integrieren eines Elements ohne elektrischen Anschluss.

## Claims

1. Laminated glazing (10) comprising a first glass sheet (1) and a second glass sheet (3) which are bonded together via an adhesive interlayer (2), wherein the second glass sheet (3) has a through-hole (4), **characterized in that** over the surface of the hole (4) and a peripheral surface around same (4), a thin sheet (5) of a thickness of between 0.01 and 0.5 mm, made from a material compatible with the manufacture and the mechanical stresses and the aging of the laminated glazing (10) is interposed between the adhesive interlayer (2) and the second glass sheet (3), and **in that** the thin sheet (5) comprises a mineral glassmaking material such as glass or vitreous ceramic and/or a polymer material such as polycarbonate, poly(methyl methacrylate) and/or a corrosion-resistant metal such as aluminum ands or a composite material such as carbon, in particular in the form of fibers.

2. The laminated glazing (10) according to claim 1, **characterized in that** the thin sheet (5) has a hole (6).

3. The laminated glazing (10) according to claim 2, **characterized in that** the adhesive interlayer (2) comprises electrically conducting wires (7) which pass through the hole (6) in the thin sheet (5).

4. The laminated glazing (10) according to claim 2, **characterized in that** the adhesive interlayer (2) comprises electrically conducting wires (7) which are connected to a flat connector (8) positioned on the face of the adhesive interlayer (2) facing toward the second glass sheet (3) so as to be accessible from the outside of the laminated glazing (10) via the hole (6) in the thin sheet (5).

5. The laminated glazing (10) according to claim 1, **characterized in that** the face of the thin sheet (5) that faces toward the second glass sheet (3) bears a flat connector (8) connected to one or more electrically conducting wires (7) positioned on the face of the second glass sheet (3) that faces toward the adhesive interlayer (2).

6. The laminated glazing (10) according to one of the preceding claims, **characterized in that** the thin sheet (5) is opaque in its thickness or as a result of treatment of at least one of its faces.

7. The laminated glazing (10) according to one of the preceding claims, **characterized in that** the face of the thin sheet (5) that faces toward the second glass sheet (3) is reflective.

8. A method for manufacturing laminated glazing (10) according to one of the preceding claims, **characterized in that** the thin sheet (5) is attached to the adhesive interlayer (2) by local heating, then a method for assembling the laminated glazing is implemented.

9. A method for manufacturing laminated glazing (10) according to one of claims 1 to 7, **characterized in that** the thin sheet (5) is attached to the second glass sheet (3) by means of adhesive or a double-sided adhesive tape, and then a method for assembling the laminated glazing is implemented.

10. A method for manufacturing laminated glazing (10) according to one of claims 1 to 7, **characterized in that** the constituent components of the laminated glazing (10) are superposed, and then a method for assembling the laminated glazing is implemented.

11. The method according to one of claims 8 to 10, **characterized in that** it comprises local stretching of the adhesive interlayer (2) in the fraction of its surface that is intended to be in contact with the thin sheet (5).

12. The application of laminated glazing (10) according to one of claims 1 to 7 to incorporate an element connected to an electrical power supply, such as for lighting, satellite geolocation / navigation, as a single or double (stereoscopic) camera.

13. The application of laminated glazing (10) according to one of claims 1 to 7 to incorporate an element without electrical connections.
